# EUROPEAN PATENT APPLICATION

(11) **EP 2 706 444 A2**
(43) Date of publication of application: **12.03.2014**
(21) Application number: 13182676.0
(22) Date of filing: 02.09.2013
(51) Int. Cl.: G06F 3/044

(54) **Touch display**

(30) Priority: 06.09.2012 JP 2012195913
(71) Applicant: Calsonic Kansei Corporation, Saitama-shi Saitama 331-8501 (JP); Shoei Co., Ltd., Gunma 372-0011 (JP)
(72) Inventor: Hosorogiya, Toshihiro, Saitama, 331-8501 (JP); Yasukawa, Tokuji, Saitama, 331-8501 (JP); Kuribara, Masaru, Saitama, 331-8501 (JP); Okidate, Toru, Saitama, 331-8501 (JP); Kondou, Daisuke, Saitama, 331-8501 (JP); Tanaami, Yoshikane, Gunma, 372-0011 (JP); Hanada, Tatsuya, Gunma, 372-0011 (JP)
(74) Representative: Ahner, Philippe

(57) **Abstract**

A touch display, including a liquid crystal display having a surface displaying images and a capacitive touch-sensitive panel superposed on a surface of the liquid crystal display and enabling an input operation in reaction to the displayed image, wherein arranged on the liquid crystal display in order from the surface of the liquid crystal display toward an outer surface of the liquid crystal display are a second quarter-wave plate converting light passing through into circularly-polarized light by a shifting phase, the capacitive touch-sensitive panel, a first quarter-wave plate having the same orientation as the second quarter-wave plate, a polarizer converting light passing through into linearly polarized light, a decorated sheet protecting an upper surface of the capacitive touch-sensitive panel, and an antireflection layer preventing surface-reflection of outside light, in order to obtain the antireflection effect while keeping costs low.

## Description

The present invention relates to a touch display.

A vehicle such as an automobile has an instrument panel installed at the front of the interior of the vehicle. One or more instrumental devices displaying information needed for a driver are installed at the driver's side or at the midpoint of the driver's side and the passenger's side of the instrument panel. Moreover, one or more control panels to control an air-conditioner or an audio device are installed at the midpoint of the driver's side and the passenger's side of the instrument panel. Therefore, instrumental devices and control panels which have a display device including a liquid crystal display have been developed.

Further, there are display devices, so-called "touch display" devices, having a liquid crystal display and enabling an input operation to be performed by touching a screen with a fingertip. Such touch displays are becoming widely used and are expected to be installed in many vehicles in the future.

Some of these touch displays use a resistive touch-sensitive panel or a capacitive touch-sensitive panel.

Of them, the resistive touch-sensitive panel has a configuration in which two transparent conductive films are arranged one above the other at an interval by spacers, and senses a touch operation from upper and lower transparent films partly in contact with each other. The touch display using a resistive touch-sensitive panel is the most widespread touch display in use.

On the other hand, a capacitive touch-sensitive panel senses the variation of capacitance when the fingertip contacts or comes in close contact to a screen. Such a capacitive touch-sensitive panel has a higher sensitivity than a resistive touch-sensitive panel since it does not require a touch-pressure-sensitive operation. Such capacitive touch-sensitive panels are expected to be widespread in the future.

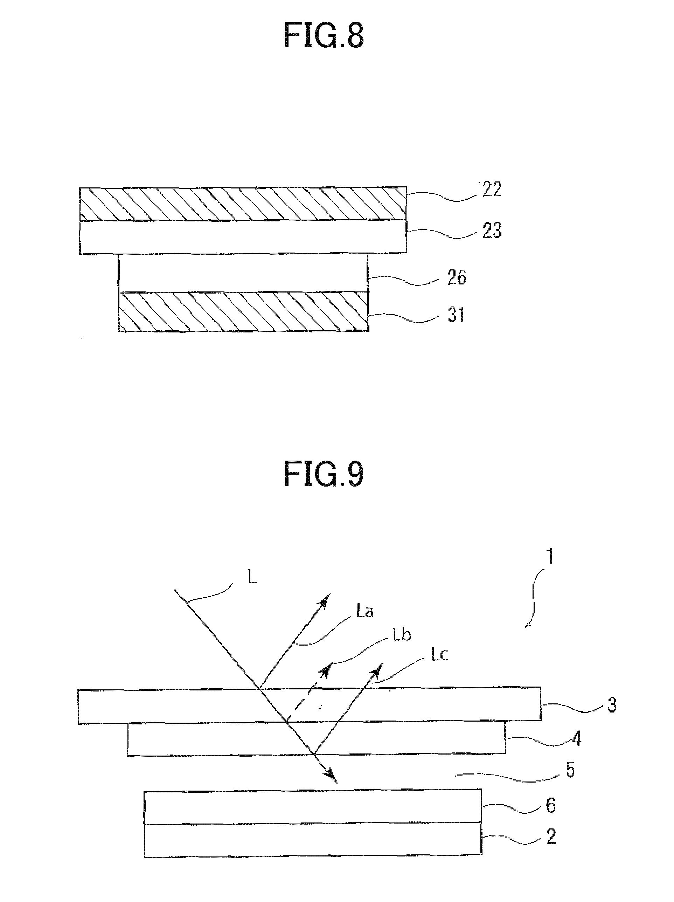

FIG.9 illustrates a general capacitance touch display 1 wherein a capacitive touch-sensitive panel 4 is attached to a surface (outer surface) of a liquid crystal display 2, and a decorated sheet 3 is attached to the capacitive touch-sensitive panel 4

The decorated sheet 3 is directly attached to a surface (outer surface) of the capacitive touch-sensitive panel 4, and they are arranged at a position in a front side of the liquid crystal display 2 through a thin layer of air 5. Moreover, a polarizer 6 which forms a part of the liquid crystal display 2 is integrally arranged on the surface of the liquid crystal display 2 in advance.

In the case of a capacitance touch display 1 having the foregoing configuration, outside light L is reflected at respective boundary planes between outside air and the decorated sheet 3, the decorated sheet 3 and the capacitive touch-sensitive panel 4, and the capacitive touch-sensitive panel 4 and the layer of air 5 (reflected light La, Lb and Lc).

A level of reflectance depends on a level of refractive index at the boundary planes. Therefore, a maximum reflection occurs at a boundary with air having a maximum refractive index.

Therefore, high reflections (reflected light La, Lc) occur at the boundary plane between outside air and the decorated sheet 3, and the boundary plane between the capacitive touch-sensitive panel 4 and the layer of inside air 5, while smaller reflection (reflected light Lb) occurs at the boundary plane between the decorated sheet 3 and the capacitive touch-sensitive panel 4 (reflected light La, Lc > reflected light Lb).

The reflectance of the touch display 1 having the foregoing configuration is 8%∼9%, thus providing high reflection.

When the touch display is installed in a vehicle such as an automobile, the touch display is often exposed to direct sunlight. Moreover, it is difficult to adjust the touch display to an easily viewable angle with less reflection.

Therefore, there is a need for a touch display having low reflectance with no need for angle adjustment to be installed in a vehicle. Previously, as an example of a touch display having low reflectance, a touch display with a resistive touch-sensitive panel such as that disclosed in Japanese Patent Application Publication No. 2000-321558 (Patent Document 1) has been proposed.

The touch display disclosed in Patent Document 1 decreases reflectance by providing a polarizer, a quarter-wave plate, a resistive touch-sensitive panel, a second quarter-wave plate, and a plurality of decorated sheets having optical isotropy, arranged to the liquid crystal display in order from the outside toward the surface of the liquid crystal display.

The configuration of a touch display disclosed in Patent Document 1 uses a resistive touch-sensitive panel. The resistive touch-sensitive panel has a configuration in which transparent conductive films are arranged one above the other at an interval by spacers, and a touch operation is sensed by a partial contact of upper and lower transparent films. Thus, there is a problem in that the touch operation cannot be sensed accurately due to a reduction in sensitivity of the resistive touch-sensitive panel if there are a number of adhered or coating layers on the surface (outer surface) of the resistive touch-sensitive panel.

For this reason, a decorated sheet formed of a thick film must be attached to a reverse side of the resistive touch-sensitive panel instead of an obverse side thereof.

However, when a decorated sheet is attached to the reverse side of the resistive touch-sensitive panel, a decorated sheet made of an expensive optically isotropic material must be attached further inside of the second quarter-wave plate in order to allow the polarizer and quarter-wave plate to reduce reflectance. As a result, there are problems of an increase in cost and the touch display not obtaining sufficient decorating or protecting effects by the decorated sheet.

Moreover, there is a problem of a further increase in cost because the polarizer and the quarter-wave plate mentioned above are expensive materials, and are required to have a larger dimension than the dimension of the liquid crystal display and the resistive touch-sensitive panel when they are used as the outer surface having a designed surface.

To solve the problems, the present invention aims to provide a touch display having a high antireflection structure while keeping costs low. Thus, the present invention provides a touch display capable of an input operation in reaction to a displayed image, comprising a liquid crystal display displaying images, and a capacitive touch-sensitive panel superposed on a surface of the liquid crystal display, wherein a second quarter-wave plate converting light passing through into circularly-polarized light by a shifting phase, a capacitive touch-sensitive panel, a first quarter-wave plate having the same orientation as the second quarter-wave plate, a polarizer converting light passing through into polarized light, a decorated sheet protecting an upper surface of the capacitive touch-sensitive panel, and an antireflection layer preventing surface-reflection of outside light are provided on the liquid crystal display in order from the surface of the liquid crystal display toward an outer surface of the liquid crystal display.

According to the present invention described in Claim 1, the following function effects can be obtained by the configuration described above. That is to say, at first, most of the reflection of the outside light is minimized by the antireflection layer arranged at an outermost part. At that time, the reflection of the outside light is highest at the boundary with air. Therefore, the highest effect of antireflection is obtained by arranging the antireflection layer at the outermost part.

Then, part of the outside light passing through the antireflection layer is reflected by each layer. Of them, the reflected light from an upper surface of the capacitive touch-sensitive panel and the reflected light from the rear surface of the capacitive touch-sensitive panel will be cut by the polarizer. As a result, the reflectance can be minimized to approximately 1% or less.

More particularly, the outside light passing through the decorated sheet is unpolarized light. And the outside light is converted into linearly-polarized light by passing through the polarizer. Further, the outside light, which is now linearly-polarized light, is converted into circularly-polarized light by passing through the first quarter-wave plate.

Then, part of the outside light, which is now circularly-polarized light, is reflected at the surface of the capacitive touch-sensitive panel and converted into counter-rotating circularly-polarized light by phase-reversal. The reflected light, which is now counter-rotating circularly-polarized light, is converted into the linearly-polarized light once again by passing through the first quarter-wave plate.

The reflected light, which is linearly-polarized light, is perpendicular to the direction of polarization of the polarizer because of the reversed phase thereof and is cut by the polarizer.

Moreover, the remaining outside light passing through the first quarter-wave plate and which has become circularly-polarized light is reflected at the rear surface of the second quarter-wave plate and converted into counter-rotating circularly-polarized light by phase-reversal. The reflected light, which is now counter-rotating circularly-polarized light, is converted into linearly-polarized light once again by passing through the capacitive touch-sensitive panel and the first quarter-wave plate.

In the same way, the reflected light, which is linearly-polarized light, is perpendicular to the direction of polarization of the polarizer because of the reversed phase thereof and is cut by the polarizer.

On the other hand, another polarizer is integrally attached to the surface of the liquid crystal display as a part of a configuration of the liquid crystal display in advance. An image from the liquid crystal display is converted into linearly-polarized light by the polarizer. Then, the image, which is formed by linearly-polarized light, is converted into circularly-polarized light by passing through the second quarter-wave plate, and further converted into linearly-polarized light by passing through the capacitive touch-sensitive panel and the first quarter-wave plate. This linearly-polarized light can easily pass through the polarizer by aligning its polarizing direction with the polarizing axis of the polarizer. Therefore, the image from the liquid crystal display is visible externally through the decorated sheet and the antireflection layer.

More specifically, the decorated sheet can be arranged on the outer side of the capacitive touch-sensitive panel without a decrease in sensing performance by virtue of the fact that the capacitive touch-sensitive panel does not sense pressure with a touch operation. Then, arranging the decorated sheet to the outer side of the capacitive touch-sensitive panel (and the polarizer) allows the use of an inexpensive decorated sheet having optical anisotropy, and decreases the cost. Moreover, a decorated sheet printed in different designs can be directly visible, since the decorated sheet lies close to the surface of the layers. Therefore, a broader choice of design is available and the decorative effect can be improved.
FIG.1 is a side view illustrating a touch display according to an embodiment of the present invention;
FIG.2 is a side view of a variation of FIG.1;
FIG.3 is a side view of an alternative embodiment of FIG.1;
FIG.4 is a side view of another alternative embodiment of FIG.1;
FIG.5 is a side view of yet another alternative embodiment of FIG.1;
FIG.6 is a side view illustrating an antireflection effect in the embodiment according to the present invention;
FIG.7 is a side view illustrating a principle of the antireflection in FIG.6;
FIG.8 is a side view of a comparative example;
FIG.9 is a side view of a common touch display using a capacitive touch-sensitive panel.

A vehicle such as an automobile has an instrument panel installed at the front of the interior of a vehicle. One or more instrumental devices displaying information needed for a driver are installed at the driver's side or at the midpoint of the driver's side and the passenger's side of the instrument panel. Moreover, one or more control panels to control an air-conditioner or an audio device are installed at the midpoint of the driver's side and the passenger's side of the instrument panel.

Further, a display device including a liquid crystal display is installed in at least one of the controller of the instrumental device and the control panels.

Then, a so-called "touch display" is used as at least one display device including the liquid crystal display. Here, the term "touch display" means a liquid crystal display which can be operated by touching images displayed on the surface of a liquid crystal display with a fingertip.

It is assumed that the touch display has the liquid crystal display displaying the images and a capacitive touch-sensitive panel superposed on the surface of the liquid crystal display.

These touch-sensitive panels are either the resistive touch-sensitive panel or the capacitive touch-sensitive panel. In this case, it is assumed that the touch display using the capacitive touch-sensitive panel which is more sensitive than the touch display using the resistive touch-sensitive panel is used. Here, the capacitive touch-sensitive panel senses a change in capacitance that occurs when a fingertip is in touch or close to the surface. Thus, unlike a resistive touch-sensitive panel, a capacitive touch-sensitive panel has an advantage in that there is no need to sense pressure by fingertip touching.

Note that, the display device having the liquid crystal display is set in a storage recess for display device made at a housing not shown in the figure, and the housing is fixed to a vehicle body. A concave portion for a sheet formed to fit the decorated sheet flush with the surface of the housing. The concave portion for sheet is assumed to be slightly larger than the storage recess for display device.

Hereinafter, an embodiment according to the present invention will be described with reference to the drawings.

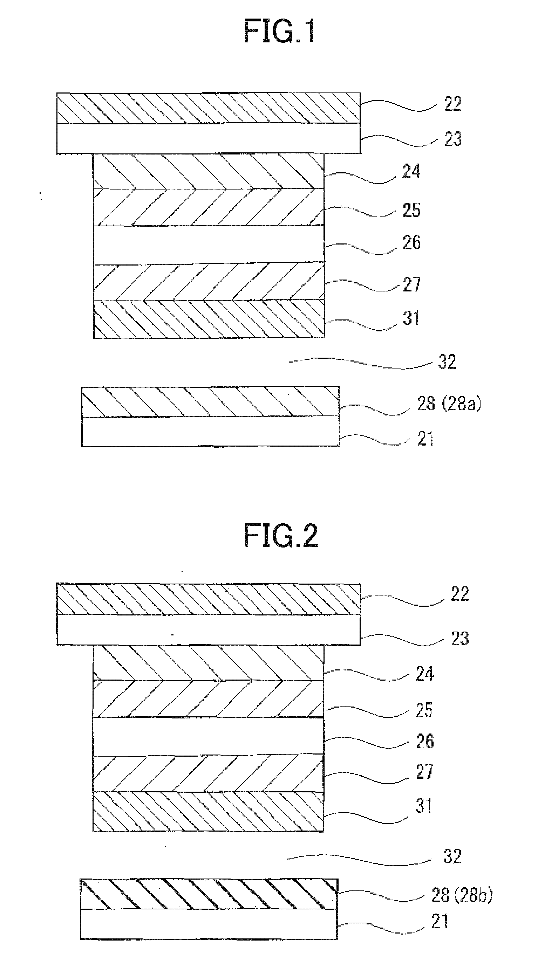

FIGs. 1 to 7 illustrate the embodiment and its variations.

Hereinafter, a configuration of the invention will be described.

In this embodiment, the touch display has the following configurations to have a low reflectance of the outside light so as to be suitably built into a vehicle.

### Configuration 1

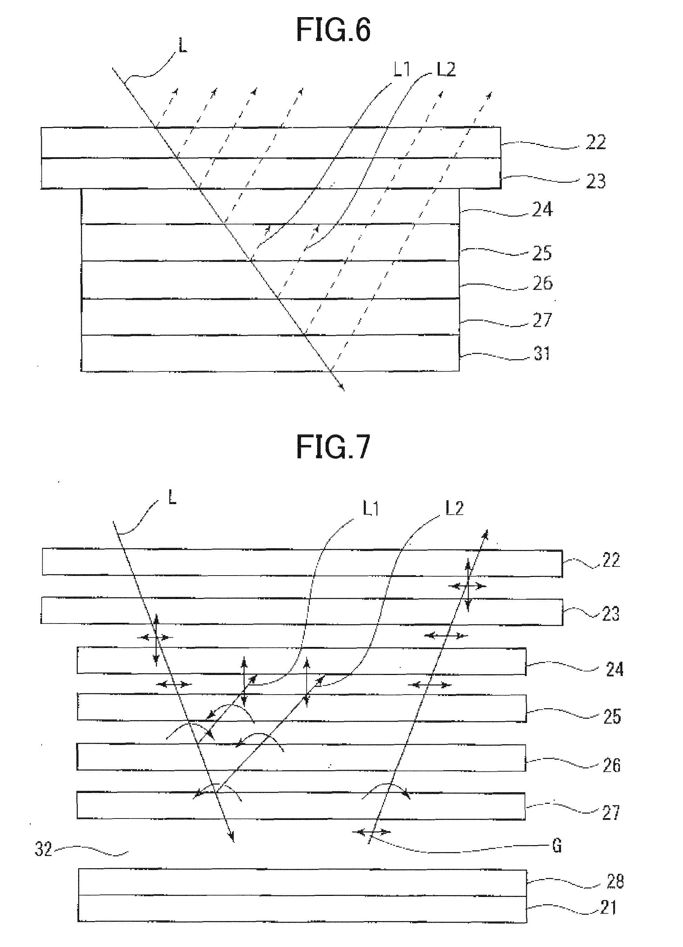

As shown in FIGs.1 or 2, the second quarter-wave plate 27 converting light passing through into circularly-polarized light by a shifting phase, the capacitive touch-sensitive panel 26, the first quarter-wave plate 25 having the same orientation as the second quarter-wave plate 27, the polarizer 24 converting the light passing through into the linear polarization, the decorated sheet 23 protecting the upper surface of the capacitive touch-sensitive panel 26, and the antireflection layer 22 preventing the surface-reflection of an outside light L (see FIG.6) are arranged on the liquid crystal display 21 in order from the surface of the liquid crystal display toward the outer surface of the liquid crystal display.

Note that, "the liquid crystal display 21" is assumed to be made of a liquid crystal cell and a backlight covered with a metal casing. A polarizer 28 functioning as a part of the liquid crystal display 21 is provided on the liquid crystal cell. The polarizer 28 configures a part of a liquid crystal-shutter to control the image display. The polarizer 28 can be antireflection-finished as illustrated in FIG.1 (polarizer with antireflection layer 28a), or pearskin-finished as a variation illustrated in FIG.2 (pearskin-finished polarizer 28b).

"The antireflection layer 22" is assumed to be a resin film which is antireflection-finished and so on. For the antireflection layer 22, for instance, an antireflection film such as an AG (Anti-Glare) film or an AR (Anti-Reflection) film is used. The AG film is a film with a surface asperity formed by adding particles within it, and prevents the reflection by using a scattering caused by the surface asperity and an inner scattering caused by differences of refraction index between the film and the particles. The AR film decreases the reflection by making both reflections from a surface and a rear surface of the film opposite in phase, and cancelling each other. For this purpose, the AR film has a metal-oxide layer on its surface.

"The decorated sheet 23" configures a surface design of the display device. In addition, the decorated sheet 23 has a function to protect the surface. As necessary, various designs are formed on the decorated sheet 23. The decorated sheet 23 is formed into the same size as a sheet recess of the casing along with the antireflection layer 22. An inexpensive material having optical anisotropy, for instance polycarbonate, can be used as the decorated sheet 23. Note that, an expensive material having optical isotropy can be naturally used as the decorated sheet 23, although there is no need for.

"The polarizer 24" is an optical film which allows only light having a particular direction of polarization to pass through. The polarizer 24 is arranged in the same orientation of polarization to the polarizer 28 as the liquid crystal display 21.

"The first quarter-wave plate 25" is an optical film which converts light passing through the polarizer 24 into circularly-polarized light by shifting the phase of the direction of polarization. The first quarter-wave plate 25 also has another function to convert circularly-polarized light into linearly-polarized light.

"The capacitive touch-sensitive panel 26" is a transparent sensitive panel which senses the change in capacitance when a fingertip touches or comes close to the surface thereof. The capacitive touch-sensitive panel 26 has higher sensitivity than the resistive touch-sensitive panel which senses pressure of the touch operation.

The capacitive touch-sensitive panel 26 is formed mainly of a material having a hard surface such as glass, and the sensing performance is not lost or decreased if the surface is covered by adhered or coating material thicknesses of up to 1.5 mm. Note that, the sum of thicknesses of the antireflection layer 22, the decorated sheet 23, the polarizer 24, and the first quarter-wave plate 25 is less than around 0.8 mm; therefore the thickness becomes approximately half of the 1.5 mm that the capacitive touch-sensitive panel 26 can sense therethrough.

"The second quarter-wave plate 27" is arranged in the same direction as the first quarter-wave plate 25. As the second quarter-wave plate 27, the same optical film as the first quarter-wave plate 25 can be used.

Further, the polarizer 24, the first quarter-wave plate 25, the capacitive touch-sensitive panel 26 and the second quarter-wave plate 27 can be formed in same size as the screen of the liquid crystal display 21. Therefore, production costs can be reduced.

Moreover, at least the antireflection layer 22, the decorated sheet 23, the polarizer 24, the first quarter-wave plate 25, and the capacitive touch-sensitive panel 26 are integrated into a surface panel.

Note that, in FIG.1 and FIG.2, the second quarter-wave plate 27 and a second antireflection layer 31 are also integrated into the surface panel.

### Configuration 2

The second antireflection layer 31 can be arranged between the second quarter-wave plate 27 and the liquid crystal display 21.

Now, as "the second antireflection layer 31", the same material as the (first) antireflection layer 22 can be used.

Note that, as shown in FIG.1 and FIG.2, the antireflection layer 22, the decorated sheet 23, the polarizer 24, the first quarter-wave plate 25, the capacitive touch-sensitive panel 26, and the second quarter-wave plate 27 are integrated by sticking the layers together with adhesive material.

On the other hand, the liquid crystal display 21 is separated from the surface panel formed of the capacitive touch-sensitive panel 26 and others by a layer of air 32.

Now, the term "the capacitive touch-sensitive panel 26 and others" indicates "the surface panel" which is combined layers of the capacitive touch-sensitive panel 26 and adhered or covering layers on the front and the rear side surface thereof. In this case, the surface panel is manufactured by different processes from the liquid crystal display 21 and attached to the liquid crystal display 21 later.

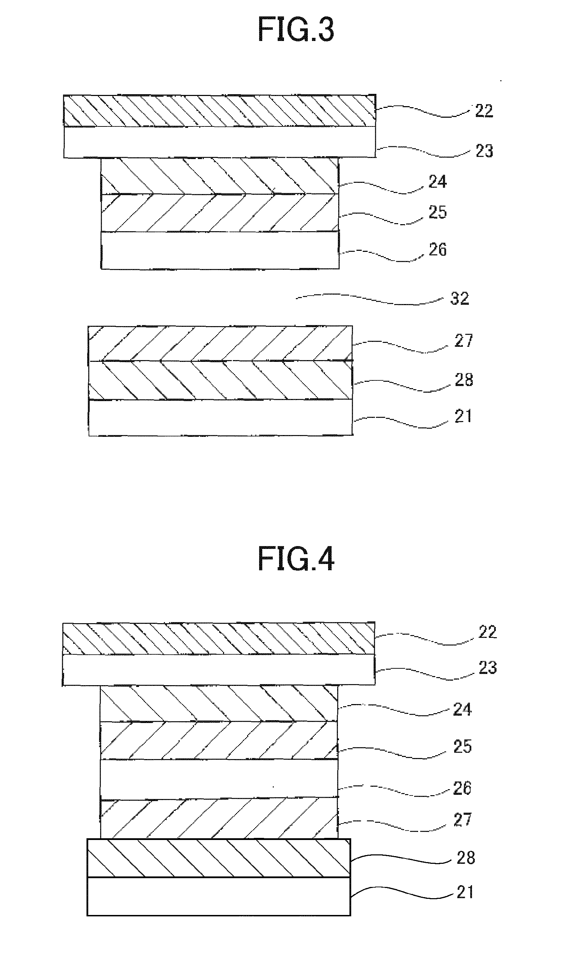

As shown in FIG.3, the surface panel can be formed without the second antireflection layer 31. In this case, as another embodiment, the second quarter-wave plate 27 is integrated with the liquid crystal display 21 by attaching on the surface of the polarizer 28 of the liquid crystal display 21 instead of a rear surface of the capacitive touch-sensitive panel 26. Therefore, the second quarter-wave plate 27 can produce an effect at the surface of the liquid crystal display 21, and a low reflectance can be obtained as is the case of the surface panel with the second antireflection layer 31.

In this case, the surface panel is formed of the antireflection layer 22, the decorated sheet 23, the polarizer 24, the first quarter-wave plate 25, and the capacitive touch-sensitive panel 26. In addition, the second quarter-wave plate 27 is attached to the liquid crystal display 21 during the manufacturing processes of the liquid crystal display 21 or later as a part of the liquid crystal display 21.

### Configuration 3

As shown in FIG.4, at least the antireflection layer 22, the decorated sheet 23, the polarizer 24, the first quarter-wave plate 25, the capacitive touch-sensitive panel 26, and the second quarter-wave plate 27 can be directly and integrally attached to the surface of the liquid crystal display 21.

Now, the term "directly and integrally attached" means to integrate the liquid crystal display 21 with the surface panel which is generally separated from the liquid crystal display 21. In other words, the surface panel and the liquid crystal display 21 are integrated by sticking together of their entire surfaces with adhesive material. The surface panel is attached to the liquid crystal display 21 as a part thereof, during the manufacturing processes of the liquid crystal display 21 or later.

In the case shown in the FIG.4, the second antireflection layer 31 can be provided between the second quarter-wave plate 27 and the liquid crystal display 21.

The polarizer 28 functions as a part of the liquid crystal display 21. Thus, the polarizer 28 can be naturally provided according to the needs of the liquid crystal display 21.

### Configuration 4

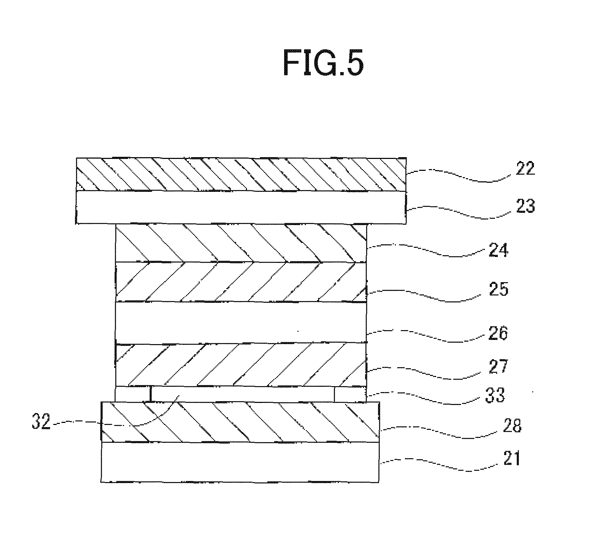

Alternatively, as shown in FIG.5, at least the antireflection layer 22, the decorated sheet 23, the polarizer 24, the first quarter-wave plate 25, the capacitive touch-sensitive panel 26, and the second quarter-wave plate 27 can be integrally attached to the surface of the liquid crystal display 21 through a spacer 33.

A space thickness of approximately 1 mm is provided between the capacitive touch-sensitive panel 26 and the liquid crystal display 21 to avoid an effect of noise from the liquid crystal display 21. Therefore, the capacitive touch-sensitive panel 26 and others (the surface panel) and the liquid crystal display 21 are adhered to each other by the spacer 33 such as a double-faced adhesive tape with a thickness of approximately 1 mm. The spacer 33 is installed at a rim of the surface panel and the liquid crystal display 21. In this case, the surface panel is attached to the liquid crystal display 21 later.

Note that, in the cases of FIGs. 1 to 3, the capacitive touch-sensitive panel 26 and others (the surface panel) and the liquid crystal display 21 are completely separated, and the layer of air 32 separating these two has the thickness of about 1 mm or more. The layer of air 32 is illustrated larger than in reality in FIGs. 1 to 3.

Further, in the case of FIG. 5, the second antireflection layer 31 can be installed between the second quarter-wave plate 27 and the liquid crystal display 21.

The polarizer 28 functions as a part of the liquid crystal display 21. Thus, the polarizer 28 can be naturally provided according to the needs of the liquid crystal display 21.

Now, advantageous effects of this embodiment will be described.

At first, as shown in FIG.6, most of the reflection of the outside light L is minimized by the antireflection layer 22 arranged at the outermost part. At that time, the reflection of the outside light L is highest at the boundary with air. Therefore, the highest effect of antireflection is obtained by arranging the antireflection layer 22 at the outermost part.

Then, a part of the outside light L passing through the antireflection layer 22 is reflected by each layer. Of them, the reflected light L1 from an upper surface of the capacitive touch-sensitive panel 26 and the reflected light L2 from the rear surface of the capacitive touch-sensitive panel 26 will be cut by the polarizer 24. As a result, the reflectance can be minimized to approximately 1% or less.

More particularly, as shown in FIG.7, the outside light L passing through the antireflection layer 22 and the decorated sheet 23 is unpolarized light. And the outside light L is converted into linearly-polarized light by passing through the polarizer 24. Further, the outside light L, which is now linearly-polarized light, is converted into circularly-polarized light by passing through the first quarter-wave plate 25.

Then, a part of the outside light L, which is circularly-polarized light, is reflected at the surface of the capacitive touch-sensitive panel 26 and converted into counter-rotating circularly-polarized light by phase-reversal (the reflected light L1). The reflected light L1, which is now counter-rotating circularly-polarized light, is converted into linearly-polarized light once again by passing through the first quarter-wave plate 25.

The reflected light L1, which is the linearly-polarized light, is perpendicular to the direction of polarization of the polarizer 24 because of the reversed phase thereof and cut by the polarizer 24.

Moreover, the remaining outside light L passing through the first quarter-wave plate 25 and which has become circularly-polarized light is reflected at the rear surface of the second quarter-wave plate 27 and converted into counter-rotating circularly-polarized light by phase-reversal (the reflected light L2). The reflected light L2, which is now counter-rotating circularly-polarized light, is converted into linearly-polarized light once again by passing through the capacitive touch-sensitive panel 26 and the first quarter-wave plate 25.

The reflected light L2, as is the case above, which is the linearly-polarized light, is perpendicular to the direction of polarization of the polarizer 24 because of the reversed phase thereof and is cut by the polarizer 24.

Note that, as shown in FIG.6, other reflected light is minimized by the antireflection layer 22.

On the other hand, as shown in FIG.7, another polarizer 28 is integrally attached to the surface of the liquid crystal display 21 as a part of a configuration of the liquid crystal display 21 in advance. An image G from the liquid crystal display 21 is converted into linearly-polarized light by the polarizer 28. Then, the image G, which is linearly-polarized light, is converted into circularly-polarized light by passing through the second quarter-wave plate 27, and further converted into linearly-polarized light by passing through the capacitive touch-sensitive panel 26 and the first quarter-wave plate 25. This linearly-polarized light can easily pass through the polarizer 24 by aligning its polarizing direction with the polarizing axis of the polarizer 24. Therefore, the image G from the liquid crystal display 21 is visible externally through the decorated sheet 23 and the antireflection layer 22.

As a comparative example shown in FIG.8, it could be an antireflective configuration applied to the capacitive touch-sensitive panel 26 and the decorated sheet 23 directly attached together. However, no sufficient result is obtained when this configuration is tested in practice.

More specifically, the comparative example shown in FIG.8 has a configuration such that the capacitive touch-sensitive panel 26 and the decorated sheet 23 are attached together, further the antireflection layer 22 is attached to the surface of the decorated sheet 23 and the antireflection layer 31 is attached to the surface of the capacitive touch-sensitive panel 26. In this comparative example, the highest reflectance obtained is 2%. The reflectance of 2% means that the reflection of the outside light such as usual sunlight can be reduced well, but it is difficult to reduce the reflection of the outside light such as late afternoon sunlight which is very strong. Therefore, it is considered unsuitable to apply this configuration to a vehicle.

According to the first embodiment, the following effects are obtained.

### Function effect 1

The following effect is obtained by arranging to the liquid crystal display 21, in order from the front side, the antireflection layer 22, the decorated sheet 23, the polarizer 24, the first quarter-wave plate 25, the capacitive touch-sensitive panel 26, and the second quarter-wave plate 27.

More specifically, the decorated sheet 23 can be arranged on the outer side of the capacitive touch-sensitive panel 26 without a decrease in sensing performance by virtue of the fact that the capacitive touch-sensitive panel 26 does not sense a pressure with touch operation. Then, arranging the decorated sheet 23 to the outer side of the capacitive touch-sensitive panel 26 (and the polarizer 24) allows the use of an inexpensive decorated sheet 23 having optical anisotropy, and decreases the cost. Moreover, the decorated sheet 23 which is printed with different designs can be directly visible, since the decorated sheet 23 lies close to the surface of the surface panel. Therefore, a broader choice of design and an effect of the decoration can be improved.

Further, there is only the antireflection layer 22 on the surface of the decorated sheet 23 forming a surface design of the display device. Thus, a difference in level between the surface of the casing and the decorated sheet 23 can be reduced when the decorated sheet 23 is attached to the surface of the casing.

### Function effect 2

Then, the second antireflection layer 31 is arranged between the second quarter-wave plate 27 and the liquid crystal display 21. Therefore, when the second quarter-wave plate 27 and the liquid crystal display 21 are separated by the layer of air 32, the second antireflection layer 31 reduces the reflection from the layer of air 32, and an antireflection effect can be improved.

### Function effect 3

Further, at least the antireflection layer 22, the decorated sheet 23, the polarizer 24, the first quarter-wave plate 25, the capacitive touch-sensitive panel 26, and the second quarter-wave plate 27 are directly and integrally attached to the surface of the liquid crystal display 21. Therefore, due to the fact that the layer of air 32 between the second quarter-wave plate 27 and the liquid crystal display 21 is almost none, the reflection from the layer of air 32 can be eliminated and the reflectance can be minimized. And, since the antireflection layer 22, the decorated sheet 23, the polarizer 24, the first quarter-wave plate 25, the capacitive touch-sensitive panel 26, and the second quarter-wave plate 27 are integrated with the liquid crystal display 21, these layers become easy to handle on the whole.

### Function effect 4

Moreover, at least the antireflection layer 22, the decorated sheet 23, the polarizer 24, the first quarter-wave plate 25, the capacitive touch-sensitive panel 26, and the second quarter-wave plate 27 are attached to the surface of the liquid crystal display 21 through the spacer 33. Thus, the second quarter-wave plate 27 and the liquid crystal display 21 are separated by the layer of air 32 having the thickness of the spacer 33. Therefore, the effect of noise from the liquid crystal display 21 can be avoided, in addition to Function effect 3.

Although the present invention has been described in terms of exemplary embodiments, it is not limited thereto. It should be appreciated that variations may be made in the embodiments described by persons skilled in the art without departing from the scope of the present invention as defined by the following claims.

## Claims

1. A touch display capable of an input operation in reaction to a displayed image, comprising:
a liquid crystal display (21) displaying images on a surface thereof, and a capacitive touch-sensitive panel (26) superposed on the surface of the liquid crystal display; wherein
a second quarter-wave plate (27) converting light passing through into a circularly-polarized light by a shifting phase;
a capacitive touch-sensitive panel (26);
a first quarter-wave plate (25) having the same orientation as the second quarter-wave plate;
a polarizer (24) converting light passing through into linear polarization;
a decorated sheet (23) protecting an upper surface of the capacitive touch-sensitive panel; and
an antireflection layer (22) preventing a surface-reflection of outside light;
are arranged on the liquid crystal display (2) in order from the surface of the liquid crystal display toward an outer surface of the liquid crystal display.

2. The touch display according to Claim 1, further comprising; a second antireflection layer (31) installed between the second quarter-wave plate (27) and the liquid crystal display (21).

3. The touch display according to Claim 1, wherein the antireflection layer (22), the decorated sheet (23), the polarizer (24), the first quarter-wave plate (25), the capacitive touch-sensitive panel (26), and the second quarter-wave plate (27) are directly and integrally attached to the surface of the liquid crystal display (21).

4. The touch display according to Claim 2, wherein the antireflection layer (22), the decorated sheet (23), the polarizer (24), the first quarter-wave plate (25), the capacitive touch-sensitive panel (26), and the second quarter-wave plate (27) are directly and integrally attached to the surface of the liquid crystal display (21).

5. The touch display according to Claim 1, wherein the antireflection layer (22), the decorated sheet (23), the polarizer (24), the first quarter-wave plate (25), the capacitive touch-sensitive panel (26), and the second quarter-wave plate (27) are attached to the surface of the liquid crystal display through a spacer (21).

6. The touch display according to Claim 2, wherein the antireflection layer (22), the decorated sheet (23), the polarizer (24), the first quarter-wave plate (25), the capacitive touch-sensitive panel (26), and the second quarter-wave plate (27) are attached to the surface of the liquid crystal display through a spacer (21).
